# EUROPÄISCHE PATENTSCHRIFT

(11) **EP 1 748 659 B1**
(45) Veröffentlichungstag und Bekanntmachung des Hinweises auf die Patenterteilung: **01.04.2020**
(21) Anmeldenummer: 06117167.4
(22) Anmeldetag: 13.07.2006
(51) Int. Cl.: H04W 4/10, H04W 4/14, H04W 88/18

(54) **Verfahren und Geräte zum Übermitteln einer SMS**
Method and device for transmitting SMS
Procédé et dispositif destinés à la transmission de SMS

(30) Priorität: 27.07.2005 DE 102005035791
(43) Veröffentlichungstag der Anmeldung: 31.01.2007
(73) Patentinhaber: Vodafone Holding GmbH, 40213 Düsseldorf (DE)
(72) Erfinder: Kulakov, Alexei, 40227 Düsseldorf (DE); Lu, Yang, 40235 Düsseldorf (DE); Wild, Peter, 47807 Krefeld (DE)
(74) Vertreter: Weisbrodt, Bernd

(56) Entgegenhaltungen:
- EP-A1- 1 542 443
- WO-A1-2005/055631

## Beschreibung

### Technisches Gebiet

Die Erfindung betrifft ein Verfahren zum Übermitteln einer Kurznachricht, einschließlich SMS und Daten an eine Gruppe von Teilnehmern mit Mobilfunkendgeräten über ein Mobilfunknetz, insbesondere nach dem GSM- oder UMTS-Standard.

Weiterhin betrifft die Erfindung eine Mobilfunkvermittlungsstelle, eine Anker-Mobilfunkvermittlungsstelle und ein Basisstationssystem, jeweils für ein zellulares Mobilfunknetz.

### Stand der Technik

Über ein Mobilfunknetz können Mobilfunkteilnehmer mittels eines Mobilfunkendgeräts kommunizieren. Dabei kann eine Verbindung zu mindestens einem anderen Mobilfunkendgerät, einem Festnetzanschluss, dem Internet oder anderen Computernetzwerken hergestellt werden. Die Mobilfunknetze sind standardisiert und arbeiten beispielsweise nach dem GSM- (Global System for Mobile Communication) oder dem UMTS- (Universal Mobile Telecommunications System) Standard. Bei diesen Standards wird der Versorgungsbereich in viele Funkzellen unterteilt. Das Mobilfunknetz ist zellular aufgebaut. Das GSM-Netz lässt sich in drei große Subsysteme einteilen: Mobilfunkendgeräte, Basisstationssysteme und Vermittlungsnetz.

Mobilfunkendgeräte sind beispielsweise Handys, Telematikgeräte oder PCMCIA-Karten mit Funkschnittstelle für Laptops. Die Identifikation erfolgt teilnehmerspezifisch durch eine, von den Netzwerkbetreibern ausgegebene SIM-(Subscriber Identity Module) Karte. Die SIM-Karte wird an das Mobilfunkendgerät angeschlossen. Die Mobilfunkendgeräte können über eine Funkschnittstelle eine Verbindung mit einem Basisstationssystem aufnehmen. Zur Sprach- und Datenübertragung vom Mobilfunkendgerät zum Basisstationssystem (Uplink) werden andere Funkfrequenzen als in umgekehrter Richtung von dem Basisstationssystem zum Mobilfunkendgerät (Downlink) benutzt.

Basisstationssysteme (BSS= Base Station System) ermöglichen und verwalten die Funkverbindung zu den Mobilfunkendgeräten. Dazu bestehen sie aus mehreren Empfangsstationen (BTS= Base Transceiver Station), welche mit einer zentralen Steuerungseinheit (BSC= Base Station Controller) verbunden sind. Eine Empfangsstation deckt immer mindestens eine Funkzelle ab. Über eine A-Schnittstelle sind mehrere Basisstationssysteme mit einer Mobilfunkvermittlungsstelle verbunden.

Ein Vermittlungsnetz besteht aus mindestens einer Mobilfunkvermittlungsstelle (MSC= Mobile Switching Center). Eine MSC schaltet die Verbindungen zwischen den Mobilfunkteilnehmern oder zu Teilnehmern in anderen Telekommunikationsnetzen. Außerdem übernimmt sie Kontrollaufgaben, wie etwa die Speicherung der Informationen über einen Mobilfunkteilnehmer, die Erfassung aller Verbindungen zur Gebührenabrechnung, die Identifizierung gestohlener oder beschädigter Geräte und die Anpassung der Übertragungsprotokolle und -geschwindigkeiten an andere Telekommunikationsnetze. Zur Übermittlung von Steuerungsinformationen innerhalb einer MSC, zwischen zwei MSCs oder zwischen einer MSC und einer BSS, stehen verschiedene Signalisierungssysteme, wie etwa MAP (Mobile Application Part) zur Verfügung.

Ein wichtiger Aspekt bei zellularen Mobilfunknetzen ist die Schaltung neuer Verbindungswege, falls der Teilnehmer von einer Funkzelle in eine andere wechselt. Dieser Vorgang, auch Handover genannt, muss ohne Beeinträchtigung der eigentlichen Verbindung geschehen. Falls die neue Funkzelle zu einer anderen MSC gehört, leitet die ursprüngliche MSC die Verbindung an die neue MSC weiter, verwaltet aber weiterhin die Verbindung. Die ursprüngliche MSC wird dann als Anker-Mobilfunkvermittlungsstelle (A-MSC) bezeichnet. Die neue MSC übernimmt nur die Weiterleitung der Verbindung und wird als Relay-Mobilfunkvermittlungsstelle (R-MSC) bezeichnet.

Um im Mobilfunk eine Kommunikation mit mehreren Teilnehmern gleichzeitig zu betreiben, kann ein Gruppenrufdienst (VGCS= Voice Group Call Service) benutzt werden. Der VGCS baut zu diesem Zweck einen Sprachgruppenruf (VGC= Voice Group Call) auf. Nur ein Teilnehmer, der Sprecher, kann zu einer Gruppe von Teilnehmern, den Zuhörern, sprechen. Den Zuhörern werden Mechanismen zur Verfügung gestellt, um sich selber als Sprecher zu schalten. Diese werden im 3GPP Standard TS 43.068 "Voice Group Call Service" beschrieben. Ein aktiver Gruppenruf wird von einer A-MSC verwaltet. Für die Gruppen-Funktionalitäten von GSM benötigt das A-MSC ein zusätzliches Register, um die Gruppen aufzunehmen, das sogenannte "Group Call Register" (GCR). Die Gruppenidentität eines VGC-Teilnehmers wird auf seiner SIM-Karte verwaltet.

Das GSM stellt einem Mobilfunkteilnehmer einen Kurznachrichten-Dienst (SMS= Short Message Service) zur Verfügung. Mit diesem Dienst können kurze Text-Mitteilungen mit bis zu 160 Zeichen über das Mobilfunknetz von einem Mobilfunkendgerät zu einem anderen gesendet werden. Viele Mobilfunkendgeräte können außerdem Logos und Klingeltöne per SMS empfangen und verschicken. Die Übertragung der Kurznachricht wird von einem Kurznachrichten-Übertragungscenter (SMSC= Short Message Service Center) verwaltet.

Innerhalb des GSM ist es derzeit nicht möglich, eine Kurznachricht (SMS) gleichen Inhalts von einem eingetragen Teilnehmer eines Gruppenrufs gleichzeitig an alle anderen eingetragenen Teilnehmer des Gruppenrufs zu senden. Weiterhin kann bei der Übertragung von Kurznachrichten über das Kurznachrichten-Übertragungscenter eine Verzögerung stattfinden. Üblicherweise erhält ein Mobilfunkteilnehmer eine Kurznachricht erst nach dem Beenden eines Gesprächs, wie beispielsweise einem VGC.

Die WO 2005/055631 A1 offenbart ein Verfahren und ein System zum Übermitteln von Kurznachrichten in einem Mobilfunknetz an Teilnehmer eines Sprachgruppenrufs. Die Kurznachricht wird mit einer Gruppenkennung von einem Mobilfunkendgerät eines Absenders an ein Kurznachrichten-Übertragungscenter (SMSC) übermittelt. Das MSC ermittelt anhand eines Gruppenrufregisters die für den Sprachgruppenruf zuständige Ankervermittlungsstelle und übermittelt die Kurznachricht an diese. Von der Ankervermittlungsstelle wird die Kurznachricht über die jeweiligen Relay-Vermittlungsstellen und Basisstationssysteme an die Gruppenteilnehmer weitergeleitet.

Die EP 1 542 443 B1 beschreibt ein weiteres Verfahren für den Datenaustausch bei einem aktiven Gruppenruf in einem Mobilfunknetz mit einem Sprecher und mehreren Zuhörern die über einen Gruppenkanal miteinander verbunden sind. Dazu wird ein Uplink-Kanal des Gruppenrufs zwischen einem Mobilfunkendgerät eines Zuhörers und dem Mobilfunknetz für eine Datenübertragungsanfrage verwendet. Ferner kann ein zusätzlicher Übertragungskanal zwischen dem Mobilfunkendgerät und dem Mobilfunknetz eingerichtet werden.

### Offenbarung der Erfindung

Aufgabe der Erfindung ist es daher, die Nachteile des Standes der Technik zu vermeiden und einem Teilnehmer eines Sprachgruppenrufs die gleichzeitige und verzögerungsfreie Sendung einer Kurznachricht einschließlich SMS und Daten an die anderen Teilnehmer der Gruppe zu ermöglichen.

Erfindungsgemäß wird die Aufgabe durch ein Verfahren gemäß Anspruch 1 gelöst.

Ferner wird die Aufgabe gelöst durch eine Mobilfunkvermittlungsstelle gemäß Anspruch 3.

Die Aufgabe wird weiterhin gelöst durch ein Basisstationssystem gemäß Anspruch 4.

Die Aufgabe wird ferner gelöst durch eine Anker-Mobilfunkvermittlungsstelle gemäß Anspruch 5.

Durch das erfindungsgemäße Verfahren mit der vom Absender vorgenommenen Zuordnung einer Gruppenkennung an eine Kurznachricht, der Auswertung dieser Kennung im Mobilfunknetz und der Übermittlung der Kurznachricht an die Gruppenteilnehmer über die beteiligten A-MSCs und/oder R-MSCs und BSSs kann eine Kurznachricht an alle Gruppenteilnehmer gesendet werden. Den VGC-Teilnehmern wird die Nutzung des SMS-Dienstes für ihre Gruppe ermöglicht. Vorteile dieses sehr erfolgreichen Dienstes für den Nutzer sind insbesondere die kostengünstige Übermittlung von kurzen Textnachrichten oder Daten. Die Daten können direkt im Mobilfunkendgerät ausgewertet werden oder an andere Geräte, die mit dem Mobilfunkendgerät verbunden sind, weitergeleitet werden. Vorteilhaft sind ferner die Beschränkung der Kommunikation auf das Wesentliche und das Vorhandenseins eines Postfachs beim Empfänger. Der Empfänger kann im Gegensatz zu einem Telefongespräch selbst bestimmen, wann er die Nachricht lesen möchte. Der Absender kann zu jeder Zeit, auch bei Abwesenheit des Empfängers, eine Nachricht ins Postfach übermitteln.

Ein weiterer Vorteil des erfindungsgemäßen Verfahrens ist, dass der Absender nicht alle Adressen der Empfänger kennen muss. Die Angabe einer Gruppenreferenz reicht zur Zustellung der Kurznachricht an alle Empfänger aus. Der Absender muss nicht einmal alle Gruppenteilnehmer kennen. Er schickt unter Verwendung der Gruppenreferenz eine für die Gruppe relevante Kurznachricht an alle Gruppenteilnehmer. Die Übermittlung der Kurznachricht wird von dem Verfahren durchgeführt.

Die erfindungsgemäße Mobilfunkvermittlungsstelle für ein zelluläres Mobilfunknetz enthält Einheiten zur Erkennung und Weiterleitung einer an die Teilnehmer einer Sprachgruppe adressierten Kurznachricht und eine Einheit zum Ermitteln der für den VGC zuständigen A-MSC. Durch die Einheiten wird es der für den Absender zuständigen MSC ermöglicht, die Kurznachricht an die für den VGC zuständige A-MSC weiterzuleiten. Insbesondere erfolgt die Weiterleitung ohne die Nutzung eines SMSC direkt von der MSC zur A-MSC. Dadurch erfolgt die Weiterleitung verzögerungsfrei und die Mobilfunknetzressourcen werden geschont.

Durch die in einem Basisstationssystem für ein zellulares Mobilfunknetz enthaltene Einheit zum Bestimmen der in einen VGC involvierten Funkzellen und der Einheiten zum Vervielfältigen und Weiterleiten einer Kurznachricht an diese Funkzellen wird die Kurznachricht von der BSS an die für die Empfänger zuständigen Funkzellen weitergeleitet. Durch die Verwendung der Bestimmungs-, Vervielfältigungs- und Weiterleitungseinheit wird es dem BSS ermöglicht, die Kurznachricht ohne in Anspruchnahme eines SMSC zu vervielfältigen und an die Empfänger weiterzuleiten. Dadurch erfolgt die Übermittlung verzögerungsfrei in Echtzeit.

Die erfindungsgemäße Anker-Mobilfunkvermittlungsstelle für ein zellulares Mobilfunknetz enthält Mittel zum Erkennen und Einheiten zum Vervielfältigen und Weiterleiten einer an die Teilnehmer einer Sprachgruppe adressierten Kurznachricht. Ferner ist eine Einheit zur Bestimmung der an dem VGC beteiligten Relay-Mobilfunkvermittlungsstellen vorgesehen. Durch die Mittel und Einheiten wird die Kurznachricht von der, den Gruppensprachruf versorgenden A-MSC an die, in den Gruppensprachruf involvierten R-MSC weitergeleitet. Dabei wird die Kurznachricht unter Ausschluss eines SMSC direkt von der A-MSC an die am VGC beteiligten R-MSC übermittelt. Die Weiterleitung erfolgt somit verzögerungsfrei in Echtzeit. Außerdem werden die Mobilfunknetzressourcen geschont.

Durch die im erfindungsgemäßen Mobilfunkendgerät für ein zellulares Mobilfunknetz enthaltene Einheit zum Empfangen einer Kurznachricht über einen Downlink-Kanal eines VGC erhält der Mobilfunkteilnehmer die Kurznachricht, während er am VGC teilnimmt. Die Kurznachricht wird wesentlich schneller als bei der Übermittlung durch ein SMSC zugestellt. Der Teilnehmer erhält wichtige Nachrichten oder Daten ohne Verzögerung und kann sofort reagieren. Daten können umgehend mit dem Mobilfunkendgerät oder anderen, über eine Geräteschnittstelle mit dem Mobilfunkendgerät verbundenen Geräten verarbeitet und/oder gespeichert werden.

Zur Übermittlung einer Kurznachricht an eine Gruppe von Teilnehmern wird die Kurznachricht direkt über die der Gruppe zugeordnete A-MSC unter Ausschluss eines Short Message Service Centers gesendet. Der Absender der Kurznachricht ist dabei ebenfalls Gruppenrufteilnehmer. Durch diese Maßnahme wird die Kurznachricht verzögerungsfrei übertragen. Die Empfänger erhalten wichtige Nachrichten oder Daten noch während des aktiven Gruppenrufs und können entsprechend reagieren. Ein weiterer Vorteil ist der sparsame Umgang mit Mobilfunknetzressourcen.

In einer bevorzugten Ausbildung des Verfahrens zur Übermittlung einer Kurznachricht an eine Gruppe von Teilnehmern erfolgt die Auswertung der Gruppenkennung der Kurznachricht in der, dem Absender zugeordneten A-MCS und/oder R-MSC des Gruppenrufs. So wird wiederum die Nutzung eines SMSC vermieden und die Kurznachricht kann verzögerungsfrei weitergeleitet werden.

Zur Übermittlung einer Kurznachricht an eine Gruppe von Teilnehmern wird die Kurznachricht an die Gruppenrufteilnehmer über die für den Absender zuständige MSC übermittelt. Anschließend wird die Kurznachricht direkt über die der Gruppe zugeordneten A-MSC unter Ausschluss eines SMSC weitergeleitet. Der Absender der Kurznachricht ist bei dieser Ausgestaltung kein aktiver Gruppenrufteilnehmer. Dadurch können auch nicht in den VGC involvierte Mobilfunkteilnehmer eine Kurznachricht an die Gruppenteilnehmer senden. Durch den Ausschluss eines SMSC wird eine verzögerungsfreie Übermittlung erreicht. Ein weiterer Vorteil bietet diese Variante den Zuhörern eines VGC. Falls ein Zuhörer eine Kurznachricht an die anderen Teilnehmer schicken möchte, kann er sich kurzzeitig vom VGC ausschließen und die Kurznachricht als nicht am VGC beteiligter Mobilfunkteilnehmer versenden.

Gemäß einer bevorzugten Ausbildung des Verfahrens zur Übermittlung einer Kurznachricht an eine Gruppe von Teilnehmern erfolgt die Auswertung der Gruppenkennung mittels einer Datenbank mit einem Gruppenrufregister. Die Datenbank wird von einem Rechner zur Verfügung gestellt. In dem Gruppenrufregister ist die Zuordnung der Gruppenkennung gespeichert. Mit Hilfe des Gruppenrufregisters ermittelt das Verfahren die für den VGC zuständige A-MSC und leitet die Kurznachricht an diese A-MSC weiter. Die Weiterleitung erfolgt unter Ausschluss eines SMSC und daher verzögerungsfrei.

Zur Übermittlung einer Kurznachricht an eine Gruppe von Teilnehmern erfolgt der Empfang der Kurznachricht über den Downlink-Kanal der Sprachgruppe. Die Empfänger erhalten die Kurznachricht, während sie als Zuhörer am VGC teilnehmen. Sie können sich beispielsweise in den VGC einwählen und auf Kurznachrichten warten, die ihnen verzögerungsfrei bzw. in Echtzeit zugestellt werden.

In einer weiteren besonders vorteilhaften Ausbildung des Verfahrens zur Übermittlung einer Kurznachricht an eine Gruppe von Teilnehmern findet der Versand der Kurznachricht im Wesentlichen verzögerungsfrei statt. Die Empfänger erhalten die Kurznachricht sofort, in Echtzeit, und können dementsprechend schnell reagieren. Übermittelte Daten können umgehend ausgewertet und/oder gespeichert werden.

Die Einheit zum Weiterleiten übermittelt einen Indikator an die A-MSC. Der Indikator zeigt an, dass die Kurznachricht vom Nachrichtentyp Multicast ist, also an eine Mehrzahl von Teilnehmern zu übertragen ist. Durch den Indikator wird die Bearbeitung der Kurznachricht in der A-MSC erleichtert und beschleunigt.

Des Weiteren ist eine Einheit zur Bestimmung, welche von der MSC versorgten BSS an dem VGC beteiligt sind, vorgesehen. Ferner enthält die MSC Einheiten zum Vervielfältigen und Übermitteln einer Kurznachricht an diese BSS. Mit Hilfe dieser Einheiten wird die Kurznachricht von der MSC direkt an die, am VGC beteiligten BSS, übermittelt. Insbesondere wird es der MSC ermöglicht, die Kurznachricht ohne Nutzung eines SMSC zu vervielfältigen und an die entsprechenden BSS weiterzuleiten. Dadurch erfolgt die Übermittlung verzögerungsfrei in Echtzeit. Durch die direkte Übermittlung werden zudem Mobilfunknetzressourcen geschont.

Ferner ist eine Einheit zum Empfangen einer Kurznachricht über eine für den VGC reservierte A-Schnittstelle vorgesehen. Weiterhin enthält das BSS eine Einheit zum Erkennen einer an die Teilnehmer eines VGC adressierten Kurznachricht. Mit diesen Einheiten kann das BSS eine Kurznachricht an die Teilnehmer eines VGC von der ihm zugeordneten MSC empfangen und erkennen. So wird die direkte Übermittlung der Kurznachricht von der MSC zur BSS unter Ausschluss eines SMSC möglich. Dadurch werden die Mobilfunknetzressourcen geschont. Außerdem erfolgt die Übermittlung verzögerungsfrei.

In einer weiteren vorteilhaften Ausgestaltung des Basisstationssystems überträgt die Übermittlungseinheit die Kurznachricht über einen für den Sprachgruppenruf reservierten Downlink-Kanal an mindestens eine Mobilfunkzelle. Die Kurznachricht wir den Empfängern übermittelt, während sie als Zuhörer am VGC teilnehmen. Ein Mobilfunkteilnehmer kann sich beispielsweise in den VGC einwählen und auf Kurznachrichten warten, die ihm verzögerungsfrei bzw. in Echtzeit zugestellt werden.

Gemäß einer vorteilhaften Ausbildung der Anker-Mobilfunkvermittlungsstelle überträgt die erfindungsgemäße Übermittlungseinheit die Kurznachricht über ein, dem VGC zugeordneten A-Interface an die, in den VGC involvierten R-MSC. Dadurch wird zur Übermittlung der Kurznachricht kein Kurznachrichtenübermittlungscenter benötigt. Die Übermittlung der Kurznachricht erfolgt verzögerungsfrei. Außerdem wird für die Kurznachricht kein weiteres A-Interface benötigt. Dadurch werden die Mobilfunknetzressourcen geschont.

Weitere Vorteile ergeben sich aus dem Gegenstand der Unteransprüche, sowie den Zeichnungen mit den dazugehörigen Beschreibungen.

### Kurze Beschreibung der Zeichnungen

- Fig. 1: zeigt in einer schematischen Prinzipskizze ein erstes Ausführungsbeispiel eines Verfahrens und Geräte zur Übermittlung einer Kurznachricht an eine Gruppe von Teilnehmern, wobei der Sender gleichzeitig Sprecher des Sprachgruppenrufs ist.
- Fig. 2: zeigt in einer schematischen Prinzipskizze ein zweites zur Fig. 1 entsprechendes Ausführungsbeispiel eines Verfahrens und Geräte zur Übermittlung einer Kurznachricht an eine Gruppe von Teilnehmern, wobei der Sender nicht an dem aktiven Sprachgruppenruf teilnimmt.

### Bevorzugte Ausführungsbeispiele

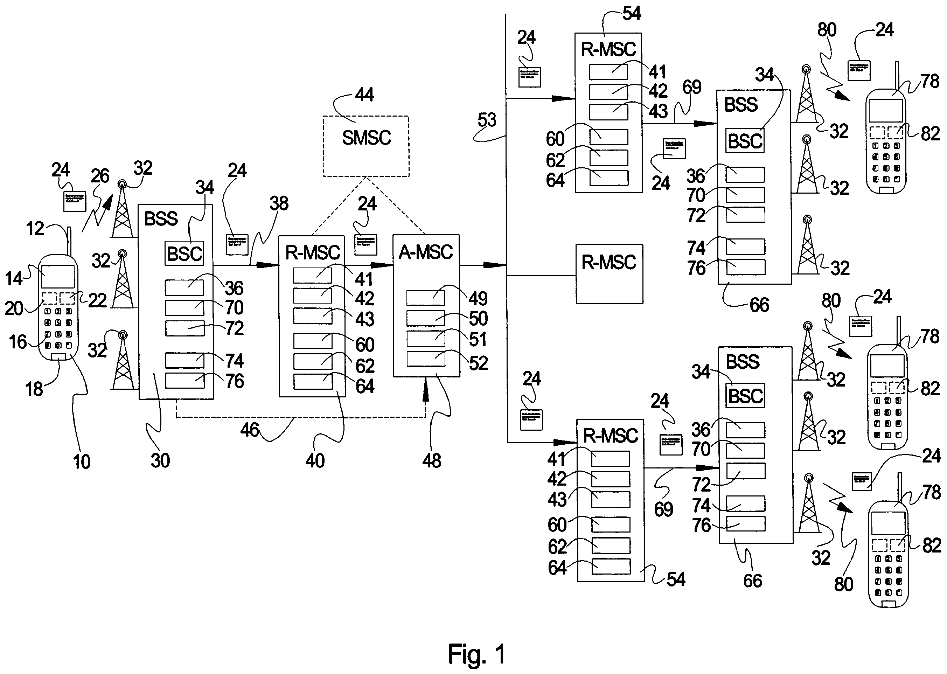

In Fig. 1 wird mit 10 ein Mobilfunkendgerät zur Kommunikation über ein Mobilfunknetz, das beispielsweise dem GSM- oder UMTS-Standard entspricht, bezeichnet. Das Mobilfunkendgerät 10 enthält dazu eine geeignete Sende- und Empfangseinheit 12. Ferner weist das Mobilfunkendgerät 10 eine Anzeige 14 auf. Neben Bedienermenüs zur Bedienung des Mobilfunkendgeräts 10, Nummern und Adressen kann die Anzeige 14 auch empfangene oder erstellte Text-Kurznachrichten darstellen. Die Steuerung des Mobilfunkendgeräts 10 erfolgt durch den Mobilfunkteilnehmer über die Tastatur 16. Über die Tastatur 16 werden die gewünschten Menüs angesteuert oder sonstige Steuerbefehle zur Steuerung des Mobilfunkendgeräts 10 eingegeben. Außerdem können über die Tastatur 16 Telefonnummern, Adressen oder Text-Kurznachrichten eingegeben werden.

Weiterhin enthält das Mobilfunkendgerät 10 mindestens eine Geräteschnittstelle 18, beispielsweise kabelgebunden, nach dem USB- (Universal Serial Bus) oder FireWire-(IEEE1394) Standard oder kabellos nach dem Bluetooth-, WLAN (Wireless Local Area Network) oder IrDA-(Infrared Data Association) Standard. Mit der Geräteschnittstelle 18 kann das Mobilfunkendgerät 10 mit anderen Geräten verbunden werden. Über die Verbindung kann das Mobilfunkendgerät 10 Daten zur Übermittlung über das Mobilfunknetz oder zur Steuerung empfangen. Umgekehrt können empfangene Daten weitergeleitet werden. Daten, wie Kurznachrichten, Adressen oder Telefonnummern, aber auch Programmdaten werden in einem Speicher 20 gespeichert. Zur teilnehmerspezifischen Identifikation ist an das Mobilfunkendgerät 10 eine SIM-Karte 22 angeschlossen.

Ein Mobilfunkteilnehmer, der mit Mobilfunkendgerät 10 als Sprecher an einem aktiven VGC teilnimmt, kann durch das Verfahren und/oder die Vorrichtungen eine Kurznachricht 24 an alle Zuhörer des VGCs senden. Falls ein Zuhörer eine Kurznachricht senden möchte, kann er sich als Sprecher des VGC schalten lassen. Der VGCS stellt dafür entsprechende Mechanismen bereit.

Die Kurznachricht 24 wird üblicherweise dadurch erzeugt, dass der Mobilfunkteilnehmer über die Tastatur 16 mit Hilfe der Anzeige 14 einen Text eingibt oder im Speicher 20 gespeicherte Daten zum Senden frei gibt. Weiterhin kann die Kurznachricht 24 auch aus Texten oder Daten bestehen, die dem Mobilfunkendgerät 10 über die Geräteschnittstelle 18 von anderen Geräten übermittelt werden. Die Kurznachricht 24 wird beispielsweise mit der in der SIM-Karte 22 gespeicherten Gruppenrufreferenz an den aktiven VGC adressiert. Mit der Sende- und Empfangseinheit 12 wird die Kurznachricht 24 über die Funkschnittstelle 26 an ein für die Funkzelle des Mobilfunkteilnehmers zuständiges BSS 30 übermittelt.

Das BSS 30 enthält üblicherweise mehrere Empfangsstationen (BTS) 32 zum Senden und Empfangen von Sprach-, Nutzer- und Steuerungsdaten über die Funkschnittstelle 26 und eine zentrale Steuerungseinheit (BSC) 34 zum Verwalten und Steuern der Funkverbindungen. Das BSS 30 enthält weiterhin eine Erkennungseinheit 36 zum Erkennen von Kurznachrichten an die Teilnehmer eines VGC. Anhand der Gruppenrufreferenz erkennt die Erkennungseinheit 36, dass die Kurznachricht 24 an die Teilnehmer eines VGC gerichtet ist. Die BSS 30 übermittelt die Kurznachricht 24 über eine A-Schnittstelle 38 an eine für das BSS 28 zuständige R-MSC 40.

Die R-MSC 40 ist an dem VGC beteiligt und leitet die Kurznachricht 24 beispielsweise unter Verwendung von MAP-Signalisierung an eine für den VGC zuständige A-MSC 48 weiter. Dazu enthält die R-MSC 40 eine Erkennungseinheit 41 zum Erkennen, dass die Kurznachricht 24 an die Teilnehmer eines VGC adressiert ist. Ferner weist die R-MSC 40 eine Ermittlungseinheit 42 zum Ermitteln, welche A-MSC den VGC versorgt und eine Weiterleitungseinheit 43 zum Weiterleiten der Kurznachricht 24 an die A-MSC 48 auf. Die Weiterleitungseinheit 43 übermittelt neben der Kurznachricht 24 einen Indikator an die A-MSC 48, der anzeigt, dass die Kurznachricht 24 eine Multicast-Nachricht ist. Nachrichten vom Typ Multicast werden an eine Mehrzahl von Teilnehmern übertragen. Durch die Einheiten 41, 42, 43 wird die Kurznachricht 24 ohne Einbindung eines SMSC 44 verzögerungsfrei von der R-MSC 40 an die A-MSC 48 übertragen. Falls die BSS 30 von der A-MSC 48 des VGCs verwaltet wird, findet die Weiterleitung der Kurznachricht 24 direkt über die A-Schnittstelle 46 an die A-MSC 48 statt.

Die A-MSC 48 enthält Mittel zum Erkennen 49, dass die Kurznachricht 24 an die Teilnehmer eines VGCs adressiert ist. Mit einer Bestimmungseinheit 50 zur Bestimmung, welche R-MSCs in den VGC involviert sind, ermittelt die A-MSC 48 am VGC beteiligte R-MSCs 54. Nach einer entsprechenden Vervielfältigung der Kurznachricht 24 durch eine Vervielfältigungseinheit 51 wird die Kurznachricht 24 an alle in den VGC involvierten R-MSCs 54 übermittelt. Dazu enthält die A-MSC 48 eine Übermittlungseinheit 52, welche die Kurznachricht 24, beispielsweise unter Verwendung von MAP-Signalisierung direkt an die R-MSCs 54 sendet, ohne dass ein SMSC 44 eingebunden wird. Die Übermittlung findet dadurch verzögerungsfrei statt. Die Übermittlungseinheit 52 kann die Übertragung der Kurznachricht 24 beispielsweise über die, dem VGC zugeordneten A-Schnittstelle vornehmen.

Die am VGC beteiligten R-MSCs 54 enthalten jeweils eine Bestimmungseinheit 60 zur Bestimmung, welche der von ihnen versorgten BSS in den VGC involviert sind. Nach der Anfertigung einer entsprechenden Anzahl von Kopien durch eine Vervielfältigungseinheit 62 wird die Kurznachricht 24 mittels einer Übermittlungseinheit 64 an alle am VGC beteiligten BSS 66 übermittelt. Dazu benutzt die Übermittlungseinheit 64 die bereits dem VGC zugeordneten A-Schnittstellen 69 und indiziert dabei, dass es sich um eine Kurznachricht vom Typ Multicast handelt.

In jeder am VGC beteiligten BSS 66 befindet sich neben den üblichen Empfangsstationen 32 und einer zentralen Steuerungseinheit 34 eine Empfangseinheit 70 zum Empfangen einer Kurznachricht über eine für einen VGC allozierte A-Schnittstelle. Weiterhin enthalten die BSS 66 jeweils eine Bestimmungseinheit 72 zur Bestimmung, welche der von der BSS 66 versorgten Empfangsstationen 32 in den VGC involviert sind und eine Vervielfältigungseinheit 74 zum Vervielfältigen der Kurznachricht 24. Nach dem Empfang der Kurznachricht 24 durch die Empfangseinheit 70 werden mittels der Bestimmungseinheit 72 die am VGC beteiligten Empfangsstationen 32 bestimmt. Die Vervielfältigungseinheit 74 fertigt die entsprechende Anzahl Kopien an, welche mit einer ebenfalls in den BSS 66 enthaltenen Übermittlungseinheit 76 an die Empfangsstationen 32 übertragen werden. Die Weiterleitung der Kurznachricht 24 von den Empfangsstationen 32 an Mobilfunkendgeräte 78 der am VGC teilnehmenden Zuhörer erfolgt dabei über einen für den VGC reservierten Downlink-Kanal 80.

Die Mobilfunkendgeräte 78 enthalten neben den schon beim Mobilfunkendgerät 10 genannten Einheiten und Funktionen jeweils eine Empfangseinheit 82 zum Empfangen einer Kurznachricht über einen für einen VGC reservierten Downlink-Kanal. Mit der Empfangseinheit 82 kann die Kurznachricht 24 ohne Verzögerung von allen Mobilfunkendgeräten 78 der Zuhörer eines VGC empfangen werden. Sie empfangen die Kurznachricht 24, während sie am VGC teilnehmen.

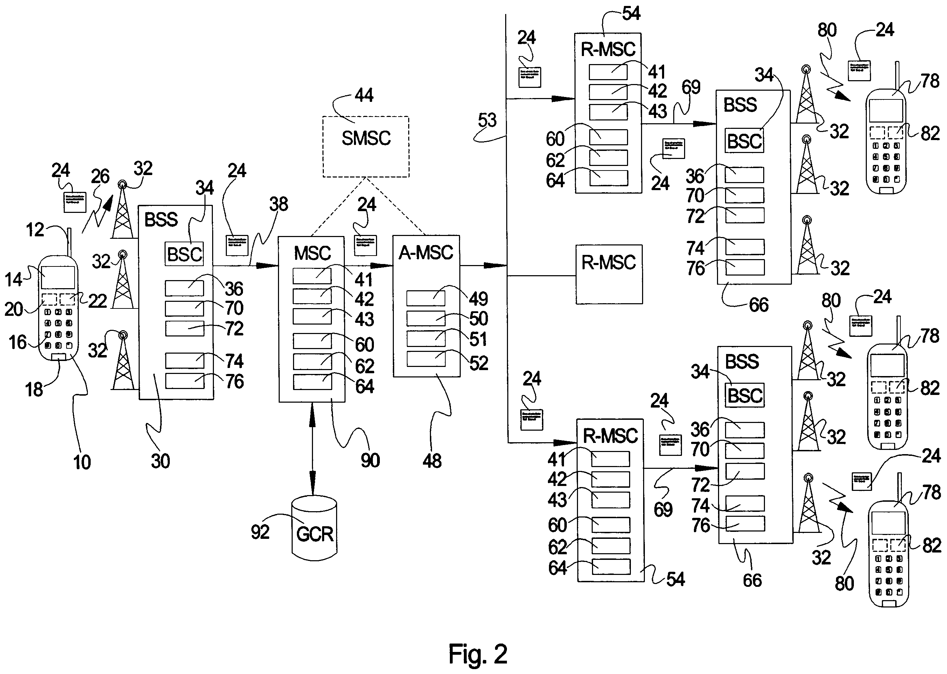

Fig. 2 zeigt entsprechend zu Fig. 1 ein erfindungsgemäßes Verfahren und Geräte zur Übermittlung einer Kurznachricht an die Teilnehmer einer Sprachgruppe. Gleiche Bestandteile werden daher auch mit entsprechenden Bezugszeichen bezeichnet. Im Unterschied zu Fig. 1 nimmt der Sender aber nicht an dem Sprachgruppenruf (VGC) teil.

Mit dem hier beschriebenen Ausführungsbeispiel hat ein Zuhörer eines VGC eine weitere Möglichkeit, eine Kurznachricht an die anderen Teilnehmer des VGC zu senden, indem er kurzfristig den VGC verlässt.

Der Mobilfunkteilnehmer erstellt und sendet entsprechend dem Ausführungsbeispiel nach Fig. 1 eine Kurznachricht 24 an die Teilnehmer eines VGC, indem er ein Mobilfunkendgerät 10 benutzt. Die Kurznachricht 24 wird unter Verwendung einer Gruppenrufreferenz gesendet und indiziert, dass sie vom Nachrichtentyp Multicast ist. Über ein BSS 30 wird die Kurznachricht 24 an eine für den Mobilfunkteilnehmer zuständige MSC 90 übermittelt. Die MSC 90 enthält eine Erkennungseinheit 41 zum Erkennen, dass die Kurznachricht 24 an die Teilnehmer eines VGC adressiert ist. Außerdem hat MSC 90 hat Zugriff auf eine Sprachgruppendatenbank (GCR= Group Call Register) 92. Dadurch kann die MSC 90 mit Hilfe einer Ermittlungseinheit 42 die Adresse einer für den VGC zuständigen A-MSC 48 ermitteln und feststellen, ob der VGC aktiv ist.

Bei inaktivem VGC findet das übliche Kurznachrichtenübermittlungsverfahren über ein SMSC 44 statt. Ist der VGC aktiv, so leitet die MSC 90 die Kurznachricht 24 beispielsweise unter Verwendung von MAP-Signalisierung an die für den VGC zuständige A-MSC 48 weiter. Dazu weist die MSC 90 eine Weiterleitungseinheit 43 zum Weiterleiten der Kurznachricht 24 an die A-MSC 48 auf. Die Weiterleitungseinheit 43 übermittelt neben der Kurznachricht 24 einen Indikator an die A-MSC 48, der anzeigt, dass die Kurznachricht 24 vom Typ Multicast ist. Nachrichten vom Typ Multicast werden an eine Mehrzahl von Teilnehmern übertragen. Durch die Einheiten 41, 42, 43 wird die Kurznachricht 24 ohne Einbindung eines SMSC 44 verzögerungsfrei von der MSC 90 an die A-MSC 48 übertragen.

Die weitere Übertragung der Kurznachricht 24 von der A-MSC 48 über die R-MSC 54 und den BSS 66 zu den Mobilfunkendgeräten 78 entspricht der des Ausführungsbeispiels in Fig. 1. Alle Zuhörer eines VGC erhalten die Kurznachricht 24 unter Ausschluss eines SMSC 44 verzögerungsfrei während sie aktiv am VGC teilnehmen.

## Patentansprüche

1. Verfahren zum Übermitteln einer mit einer Gruppenkennung versehenen Kurznachricht (24) an eine Gruppe von Teilnehmern eines aktiven Sprachgruppenrufs mit Mobilfunkendgeräten (78) über ein Mobilfunknetz, insbesondere nach dem GSM- oder UMTS-Standard, wobei
- das Mobilfunknetz wenigstens
- ein Basisstationssystem (30, 66),
- eine Anker-Mobilfunkvermittlungsstelle (48), und
- eine Mobilfunkvermittlungsstelle (54, 90),
aufweist,
- der Gruppe ein Sprachkanal zugeordnet ist, über den jeweils nur ein Gruppenteilnehmer auf Anforderung dieses Sprachkanals aktiv sprechen bzw. Informationen senden kann,
- die übrigen Gruppenteilnehmer als Zuhörer passiv diese Informationen über einen für den Sprachgruppenruf reservierten Downlink-Kanal (80) empfangen,
- ein Mobilfunkteilnehmer eine Kurznachricht (24) an die Gruppe von Zuhörern des Sprachgruppenrufs übermittelt, wobei die Kurznachricht (24) unter Verwendung einer Gruppenkennung gesendet wird und indiziert, dass sie vom Nachrichtentyp Multicast ist,
- der Kurznachricht (24) die Gruppenkennung durch den Absender der Kurznachricht (24) zugeordnet wird, die im Mobilfunknetz in der dem Absender zugeordneten Anker-Mobilfunkvermittlungsstelle (48) ausgewertet wird,
- eine Weiterleitungseinheit (43) der Mobilfunkvermittlungsstelle (90) neben der Kurznachricht (24) einen Indikator an die Anker-Mobilfunkvermittlungsstelle (48) übermittelt, der anzeigt, dass die Kurznachricht (24) vom Typ Multicast ist, wobei Nachrichten vom Typ Multicast an eine Mehrzahl von Teilnehmern übertragen werden,
- die Kurznachricht (24) entsprechend der Gruppenkennung an die Gruppenteilnehmer über die beteiligten Anker-Mobilfunkvermittlungsstelle (48) und Mobilfunkvermittlungsstellen (54, 90) und Basisstationssysteme (30, 66) übermittelt wird,
- der Absender der Kurznachricht (24) der Gruppe von Teilnehmern des aktiven Sprachgruppenrufs nicht angehört, und
- die Übermittlung der Kurznachricht (24) an die Gruppe von Teilnehmern des Sprachgruppenrufs über die für den Absender zuständige Mobilfunkvermittlungsstelle (90) und anschließend direkt über die der Gruppe zugeordnete Anker-Mobilfunkvermittlungsstelle (48) und über den für den Sprachgruppenruf reservierten Downlink-Kanal (80) unter Ausschluss eines Short Message Service Centers (44) erfolgt.

2. Verfahren nach Anspruch 1, wobei die für den Absender zuständige Mobilfunkvermittlungsstelle (90) auf eine mittels einer von einem Rechner zur Verfügung gestellten Datenbank mit einem Gruppenrufregister (92) zugreift, wobei in dem Gruppenrufregister (92) die Zuordnung der Gruppenkennung gespeichert ist, um mit Hilfe der Ermittlungseinheit (42) die Adresse der für den Sprachgruppenruf zuständigen Anker-Mobilfunkvermittlungsstelle (48) zu ermitteln.

3. Mobilfunkvermittlungsstelle (40, 54, 90) für ein zellulares Mobilfunknetz, umfassend
- eine Einheit (41) zum Erkennen, dass eine Kurznachricht (24) an Teilnehmer eines Sprachgruppenrufs adressiert ist,
- eine Einheit (42) zum Ermitteln, welche Anker-Mobilfunkvermittlungsstelle (48) diesen Sprachgruppenruf versorgt,
- eine Einheit (43) zum Weiterleiten der Kurznachricht (24) an die Anker-Mobilfunkvermittlungsstelle (48), wobei die Einheit (43) zum Weiterleiten der Kurznachricht (24) dazu eingerichtet ist, einen Indikator an die Anker-Mobilfunkvermittlungsstelle (48) zu übermitteln, welcher anzeigt, dass die Kurznachricht vom Nachrichtentyp Multicast ist und demnach an eine Mehrzahl von Teilnehmern zu übertragen ist,
- eine Einheit (60) zur Bestimmung, welche Basisstationssysteme (30, 66), die von der Mobilfunkvermittlungsstelle (40, 54, 90) versorgt werden, in den Sprachgruppenruf involviert sind,
- eine Einheit (62) zum Vervielfältigen der Kurznachricht (24), und
- eine Einheit (64) zum Übermitteln mindestens eines Exemplars der Kurznachricht (24) an mindestens eines der Basisstationssysteme (30, 66),
wobei mit Hilfe dieser Einheiten eine Übermittlung der Kurznachricht von der Mobilfunkvermittlungsstelle (40, 54, 90) über eine A-Schnittstelle ohne Einbindung eines Short Message Service Centers (44) an die am Sprachgruppenruf beteiligten Basisstationssysteme (30, 66) erfolgt.

4. Basisstationssystem (30, 66) für ein zellulares Mobilfunknetz, umfassend
- eine Einheit (36) zum Erkennen, dass eine Kurznachricht (24) an die Teilnehmer eines Sprachgruppenrufes adressiert ist,
- eine Einheit (70) zum Empfangen einer Kurznachricht (24) über eine A-Schnittstelle (69), welche für den Sprachgruppenruf alloziert ist,
- eine Einheit (72) zur Bestimmung, welche Funkzellen, die von dem Basisstationssystem (30, 66) versorgt werden, in den Sprachgruppenruf involviert sind,
- eine Einheit (74) zum Vervielfältigen der Kurznachricht (24), sowie
- eine Einheit (76) zum Übermitteln mindestens eines Exemplars der Kurznachricht (24) an mindestens eine der Mobilfunkzellen,
welche es dem Basisstationssystem (30, 66) ermöglichen, die Kurznachricht ohne Inanspruchnahme eines Short Message Service Centers (44) zu vervielfältigen und über einen für den Sprachgruppenruf reservierten Downlink-Kanal an mindestens eine Mobilfunkzelle zu übertragen und an die Empfänger, welche als Zuhörer am Sprachgruppenruf teilnehmen, weiterzuleiten.

5. Anker-Mobilfunkvermittlungsstelle (48) für ein zellulares Mobilfunknetz, umfassend
- Mittel (49) zum Erkennen, dass eine Kurznachricht (24) an Teilnehmer eines Sprachgruppenrufs adressiert ist,
- eine Einheit (50) zur Bestimmung, welche Mobilfunkvermittlungsstellen (54) in den Sprachgruppenruf involviert sind,
- eine Einheit (51) zum Vervielfältigen der Kurznachricht (24), und
- eine Einheit (52) zum Übermitteln mindestens eines Exemplars der Kurznachricht (24) an mindestens eine der im Sprachgruppenruf involvierten Mobilfunkvermittlungsstellen (54) ohne Einbindung eines Short Message Service Centers (44), welche zur Übertragung der Kurznachricht (24) über eine dem Sprachgruppenruf zugeordnete A-Schnittstelle (53) ausgebildet ist.

## Claims

1. A method for transmitting a short message (24) provided with a group identifier to a group of participants of an active group voice call by means of mobile terminals (78) via a mobile radio network, in particular according to the GSM or UMTS standard, wherein
- the mobile radio network comprises at least
- a base station system (30, 66),
- an anchor mobile switching centre (48), and
- a mobile switching centre (54, 90),
- a voice channel is assigned to the group, via which voice channel respectively only one group participant can actively speak or send information on request of this voice channel,
- the other group participants passively receive this information as listeners via a downlink channel (80) reserved for the group voice call,
- a mobile subscriber transmits a short message (24) to the group of listeners of the group voice call, wherein the short message (24) is sent using a group identifier and it indicates that it is of the message type multicast,
- the group identifier is assigned to the short message (24) by the sender of the short message (24), which is evaluated in the mobile radio network in the anchor mobile switching centre (48) allocated to the sender,
- a forwarding unit (43) of the mobile switching centre (90) transmits, apart from the short message (24), an indicator to the anchor mobile switching centre (48), which indicator indicates that the short message (24) is of the type multicast, wherein messages of the type multicast are transmitted to a plurality of participants,
- the short message (24) is transmitted corresponding to the group identifier to the group participants via the involved anchor mobile switching centre (48) and mobile switching centres (54, 90) and base station systems (30, 66),
- the sender of the short message (24) does not belong to the group of participants of the active group voice call, and
- the transmission of the short message (24) to the group of participants of the group voice call is realized via the mobile switching centre (90) that is relevant for the sender and afterwards directly via the anchor switching centre (48) allocated to the group and via the downlink channel (80) reserved for the group voice call while excluding any short message service centre (44).

2. A method according to claim 1, wherein the mobile switching centre (90) relevant for the sender accesses a database having a group call register (92), which database is made available by a computer, wherein the assignment of the group identifier is stored in the group call register (92), in order to determine the address of the anchor mobile switching centre (48) relevant for the group voice call by means of the determination unit (42).

3. A mobile switching centre (40, 54, 90) for a cellular mobile radio network, comprising
- a unit (41) for recognizing that a short message (24) is addressed to the participants of a group voice call,
- a unit (42) for determining which anchor mobile switching centre (48) takes care of this group voice call,
- a unit (43) for forwarding the short message (24) to the anchor mobile switching centre (48), wherein the unit (43) for forwarding the short message (24) is adapted to transmit an indicator to the anchor mobile switching centre (48), which indicator indicates that the short message is of the message type multicast and has thus to be transmitted to a plurality of participants,
- a unit (60) for determining which base station systems (30, 66) that are looked after by the mobile switching centre (40, 54, 90) are involved in the group voice call,
- a unit (62) for duplicating the short message (24), and
- a unit (64) for transmitting at least one copy of the short message (24) to at least one of the base station systems (30, 66),
wherein a transmission of the short message from the mobile switching centre (40, 54, 90) via an A interface to the base station systems (30, 66) involved in the group voice call is realized by means of these units without involving a short message service centre (44).

4. A base station system (30, 66) for a cellular mobile radio network, comprising
- a unit (36) for recognizing that a short message (24) is addressed to the participants of a group voice call,
- a unit (70) for receiving a short message (24) via an A interface (69) that is allocated to the group voice call,
- a unit (72) for determining which radio cells that are serviced by the base station system (30, 66) are involved in the group voice call,
- a unit (74) for duplicating the short message (24), as well as
- a unit (76) for transmitting at least one copy of the short message (24) to at least one of the mobile radio cells,
which units allow the base station system (30, 66) to reproduce the short message without using a short message service centre (44) and to transmit it via a downlink channel reserved for the group voice call to at least one mobile radio cell and to forward it to the recipients who participate as listeners in the group voice call.

5. An anchor mobile switching centre (48) for a cellular mobile radio network, comprising
- means (49) for recognizing that a short message (24) is addressed to the participants of a group voice call,
- a unit (50) for determining which mobile switching centres (54) are involved in the group voice call,
- a unit (51) for duplicating the short message (24), and
- a unit (52) for transmitting at least one copy of the short message (24) to at least one of the mobile switching centres (54) involved in the group voice call without involving a short message service centre (44), which mobile switching centre is adapted to transmit the short message (24) via an A interface (53) assigned to the group voice call.

## Revendications

1. Procédé de transmission d'un message court (24) muni d'un identifiant de groupe à un groupe de participants à un appel vocal de groupe actif par moyen des terminaux mobiles (78) via un réseau radio mobile, notamment selon le standard GSM ou UMTS,
dans lequel
- le réseau radio mobile comprend au moins
- un système de stations de base (30, 66),
- un centre d'ancre de commutation mobile (48), et
- un centre de commutation mobile (54, 90),
- un canal vocal est attribué au groupe, via lequel canal vocal respectivement un participant au groupe seulement peut parler activement ou envoyer des informations à la demande de ce canal vocal,
- les autres participants au groupe reçoivent passivement comme auditeurs ces informations via un canal descendant (80) réservé pour l'appel vocal de groupe,
- un abonné mobile transmet un message court (24) au groupe d'auditeurs de l'appel vocal de groupe, le message court (24) étant envoyé en utilisant un identifiant de groupe et indiquant qu'il est du type de message multidiffusion,
- l'identifiant de groupe est attribué au message court par l'envoyeur du message court (24), qui est évalué dans le réseau radio mobile dans le centre d'ancre de commutation mobile (48) attribué à l'envoyeur,
- une unité de renvoi (43) du centre de commutation mobile (90) transmet, outre le message court (24), un indicateur au centre d'ancre de commutation mobile (48), lequel indicateur indique que le message court (24 est du type multidiffusion, les messages du type multidiffusion étant transmis à une pluralité de participants,
- le message court (24) est transmis selon l'identifiant de groupe aux participants au groupe via le centre d'ancre de commutation mobile (48) et les centres de commutation mobile (54, 90) et les systèmes de station de base (30, 66) impliqués,
- l'envoyeur du message court (24) n'appartient pas au groupe de participants à l'appel vocal de groupe actif, et
- la transmission du message court (24) au groupe de participants à l'appel vocal de groupe est effectuée via le centre de commutation mobile (90) compétent pour l'envoyeur et ensuite directement via le centre d'ancre de commutation mobile (48) attribué au groupe et via le canal descendant (80) réservé pour l'appel vocal de groupe à l'exclusion d'un centre de service de messages courts (44).

2. Procédé selon la revendication 1, dans lequel le centre de commutation mobile (90) compétent pour l'envoyeur accède à une base de données comprenant un registre d'appels de groupe (92), laquelle base de données est fournie par un ordinateur, dans lequel l'attribution de l'identifiant de groupe est stockée dans le registre d'appels de groupe (92) pour déterminer l'adresse du centre d'ancre de commutation mobile (48) compétent pour l'appel vocal de groupe à l'aide de l'unité de détermination (42).

3. Centre de commutation mobile (40, 54, 90) pour un réseau radio mobile cellulaire, comprenant
- une unité (41) destinée à reconnaître qu'un message court (24) est adressé à des participants à un appel vocal de groupe,
- une unité (42) destinée à déterminer quel centre d'ancre de commutation mobile (48) s'occupe de cet appel vocal de groupe,
- une unité (43) destinée à renvoyer le message court (24) au centre d'ancre de commutation mobile (48), l'unité (43) destinée à renvoyer le message court (24) étant adaptée à transmettre un indicateur au centre d'ancre de commutation mobile (48), lequel indicateur indique que le message court est du type de message multidiffusion et doit ainsi être transmis à une pluralité de participants,
- une unité (60) destinée à déterminer quels systèmes de station de base (30, 66), dont le centre de commutation mobile (40, 54, 90) prend soin, sont impliqués dans l'appel vocal de groupe,
- une unité (62) destinée à reproduire le message court (24), et
- une unité (64) destinée à transmettre au moins un exemplaire du message court (24) à au moins un des systèmes de station de base (30, 66),
dans lequel une transmission du message court à partir du centre de commutation mobile (40, 54, 90) via une interface A aux systèmes de station de base (30, 66) impliqués dans l'appel vocal de groupe est effectuée à l'aide de ces unités sans impliquer un centre de service de messages courts (44).

4. Système de station de base (30, 66) pour un réseau radio mobile cellulaire, comprenant
- une unité (36) destinée à reconnaître qu'un message court (24) est adressé à des participants à un appel vocal de groupe,
- une unité (70) destinée à recevoir un message court (24) via une interface A (69), qui est attribuée à l'appel vocal de groupe,
- une unité (72) destinée à déterminer quelles cellules radio, qui sont servies par le système de station de base (30, 66), sont impliquées dans l'appel vocal de groupe,
- une unité (74) destinée à reproduire le message court (24), ainsi qu'
- une unité (76) destinée à transmettre au moins un exemplaire du message court (24) à au moins une des cellules radio mobile,
lesquelles unités permettent au système de station de base (30, 66) à reproduire le message court sans utiliser un centre de service de messages courts (44) et à le transmettre via un canal descendant (80) réservé pour l'appel vocal de groupe à au moins une cellule radio mobile et à le renvoyer aux récepteurs, qui participent comme auditeurs à l'appel vocal de groupe.

5. Centre d'ancre de commutation mobile (48) pour un réseau radio mobile cellulaire, comprenant
- des moyens (49) destinés à reconnaître qu'un message court (24) est adressé à des participants à un appel vocal de groupe,
- une unité (50) destinée à déterminer quels centres de commutation mobile (54) sont impliqués dans l'appel vocal de groupe,
- une unité (51) destinée à reproduire le message court (24), et
- une unité (52) destinée à transmettre au moins un exemplaire du message court (24) à au moins un des centres de commutation mobile (54) impliqués dans l'appel vocal de groupe sans utiliser un centre de service de messages courts (44), lequel centre de commutation mobile est adapté à transmettre le message court (24) via une interface A (53) attribuée á l'appel vocal de groupe.
